# EUROPEAN PATENT APPLICATION

(11) **EP 1 394 964 A1**
(43) Date of publication of application: **03.03.2004**
(21) Application number: 01934515.6
(22) Date of filing: 04.06.2001
(51) Int. Cl.: H04B 7/06, H04J 13/04, H04Q 7/38

(54) **CDMA TRANSMISSION DIVERSITY APPARATUS**

(71) Applicant: MITSUBISHI DENKI KABUSHIKI KAISHA, Tokyo 100-8310 (JP)
(72) Inventor: TAKANO, Michiaki, Mitsubishi Denki K.K., Tokyo 100-8310 (JP); ABE, Minoru, Mitsubishi Denki K.K., Tokyo 100-8310 (JP); SUZUKI, Kuniyuki, Mitsubishi Denki K.K., Tokyo 100-8310 (JP); FUJIHARA, Nobuo, Mitsubishi Denki K.K., Tokyo 100-8310 (JP); YAMAGUCHI, Nobuyasu, Mitsubishi Denki K.K., Tokyo 100-8310 (JP); YAMAZAKI, Takuya, Mitsubishi Denki K.K., Tokyo 100-8310 (JP); DUAN, Jinsong, Mitsubishi Denki K.K., Tokyo 100-8310 (JP)
(74) Representative: Popp, Eugen, Dr.
(86) International application number: PCT/JP2001/004686
(87) International publication number: WO 2002/100000

(57) **Abstract**

A base station includes a transmit diversity unit. The transmit diversity unit is provided with two transmission units for respective systems. Each of the transmission units produces transmission codes by coding transmission data. Each of the transmission units produces two CDMA signals by subjecting first transmission codes to spreading and 16QAM and transmits the two CDMA signals. Each of the transmission units produces two CDMA signals by subjecting second transmission codes to spreading and 16QAM and transmits the two CDMA signals. With this, time-difference diversity is implemented. Each of the transmission units codes the transmission data such that constellation points of a combined signal derived from the two CDMA signals are substantially evenly distributed. Accordingly, it is ensured that noise margin is large so that a bit error rate is improved.

## Description

### TECHNICAL FIELD

The present invention generally relates to a CDMA transmit diversity apparatus used in a base station of a W-CDMA mobile communication system.

### BACKGROUND ART

Transmit diversity in a base station is known as a technique to implement time-difference diversity in a mobile station at the receiving end. More specifically, in W-CDMA mobile communication system, transmit diversity is performed in a downlink transmission from a base station to a mobile station, as specified in 3GPP TS25.211V3.5.0(2000-12) from 3rd Generation Partnership Project (3GPP).

A base station is provided with two transmission units for respective systems. Each transmission unit receives 4-bit transmission data {b0,b1,b2,b3} supplied thereto subsequent to branching. One of the transmission units (first transmission unit) codes the 4-bit transmission data and subsequently spreads the coded data with a predetermined spreading code. By subjecting the spread coded data to quadrature phase shift keying (QPSK), a CDMA signal is produced. Similarly, the other transmission unit (second transmission) codes the 4-bit transmission data and spreads the coded data with the same spreading code. By subjecting the spread coded data to QPSK, a CDMA signal is produced.

More specifically, the first transmission unit translates the transmission data {b0,b1,b2,b3} into transmission codes {c0,c1,c2,c3} in accordance with a predetermined translation table. The second transmission unit translates the transmission data {b0,b1,b2,b3} into transmission codes {-c2,c3,c0,-c1}. Since QPSK is used as a quadrature modulation scheme, the transmission data and the transmission codes are in a relation such that {bn=cn}. Therefore, the transmission codes [c0,c1,c2,c3] are identical to [b0,b1,b2,b3] and the transmission codes [-c2,c3,c0,-c1] are identical to [-b2,b3,b0,-b1].

The first transmission unit spreads the first two codes {b0,b1} of the transmission codes {b0,b1,b2,b3} as IQ data responsive to a predetermined first symbol timing t1. As a result, the CDMA signal including the codes {b0,b1} is produced. The second transmission unit spreads the first two codes [-b2,b3] of the transmission codes [-b2,b3,b0,-b1] as IQ data responsive to the first symbol timing t1. The codes [-b2,b3] used by the second transmission unit is different from the codes [b0,b1] used by the first transmission unit. As a result, the CDMA signal including the codes [-b2,b3] is produced.

The first transmission unit spreads the remaining two codes [b2,b3] of the transmission codes [b0,b1,b2,b3] as IQ data responsive to a second symbol timing t2 which occurs after a predetermined period of time elapses since the first symbol timing t1. The second transmission unit spreads the remaining two codes [b0,-b1] of the transmission codes [-b2,b3,b0,-b1] as IQ data responsive to the second symbol timing t2. As a result, the two CDMA signals including different codes are produced.

Thus, the base station transmits twice the two CDMA signals each including a set of different codes. Accordingly, the mobile station at the receiving end receives the two CDMA signals combined responsive to each symbol timing. The combined signal received responsive to each symbol timing includes the entirety of the original transmission data {b0,b1,b2,b3}. Thus, the mobile station receives the entirety of the transmission data on two occasions defined by separate timings. Accordingly, it is possible to implement time-difference diversity in the mobile station.

Transmit diversity described above which complies with the 3GPP standard is based on an assumption that QPSK is employed as a quadrature modulation scheme. The transmit diversity unit according to the related art is configured such that a transmission unit for a given system transmits two-bit data simultaneously. For the purpose of improving the efficiency of use of frequencies, however, transmit diversity compatible with M-ary coding modulation where M is greater than 4 is desired.

An example of M-ary coding modulation M is greater than 4 is 16 quadrature amplitude modulation (16QAM). 16QAM is a quadrature modulation scheme where 4-bit data are transmitted using a carrier of the same frequency so that data double the size transmitted by QPSK can be transmitted. By performing transmit diversity that complies with the conventional 3GPP standard in a system where 16QAM is employed, however, a relatively small value of a noise margin of the combined signal received at a mobile station results. A noise margin is a value corresponding to half the distance between adjacent constellation points (points where coding occurs in a constellation diagram). The smaller the noise margin, the worse the bit error rate. Accordingly, the related-art 3GPP standard faces a limitation in improving the bit error rate and it is not expected that the quality of communication is improved.

### DISCLOSURE OF THE INVENTION

Accordingly, an object of the present invention is to provide a CDMA transmit diversity unit capable of improving the bit error rate.

In order to achieve the object, the present invention provides a CDMA transmit diversity unit translating a plurality of sets of branched transmission data into transmission codes, transmitting a plurality of CDMA signals each including a portion of the transmission codes, and transmitting a plurality of CDMA signals each including a remaining portion of the transmission codes, wherein the transmission data are translated into the transmission codes such that constellation points of a combined signal derived from the plurality of CDMA signals are substantially evenly distributed.

With this configuration, it is ensured that the constellation points of the combined signal are substantially evenly distributed and that a noise margin is greater as compared to a case where the coding according to the related-art 3GPP standard is employed. Accordingly, the bit error rate is improved and the quality of communication is improved.

### BRIEF DESCRIPTION OF THE DRAWINGS

Fig. 1 is a schematic diagram showing an overall configuration of a W-CDMA mobile communication system in which a CDMA transmit diversity unit according to the invention is used.
Fig. 2 is a functional block diagram showing a configuration of a transmit diversity unit.
Fig. 3 is a block diagram showing a configuration of a spreading unit.
Fig. 4 is a block diagram showing a configuration of a quadrature modulation unit.
Fig. 5 shows a translation table and constellation points according to the related-art 3GPP standard.
Fig. 6 shows a translation table and constellation points according to the related-art 3GPP standard.
Fig. 7 shows a translation table and constellation points according to the related-art 3GPP standard.
Fig. 8 shows a translation table and constellation points according to the related-art 3GPP standard.
Fig. 9 shows a translation table and constellation points according to the related-art 3GPP standard.
Fig. 10 shows a translation table and constellation points according to the related-art 3GPP standard.
Fig. 11 shows a translation table and constellation points according to the related-art 3GPP standard.
Fig. 12 shows a translation table and constellation points according to the related-art 3GPP standard.
Fig. 13 shows a translation table and constellation points according to the related-art 3GPP standard.
Fig. 14 shows a translation table and constellation points according to the related-art 3GPP standard.
Fig. 15 shows a translation table and constellation points according to the related-art 3GPP standard.
Fig. 16 shows a translation table and constellation points according to a first embodiment.
Fig. 17 shows a translation table and constellation points according to the first embodiment.
Fig. 18 shows a translation table and constellation points according to the first embodiment.
Fig. 19 shows a translation table and constellation points according to the first embodiment.
Fig. 20 shows a translation table and constellation points according to the first embodiment.
Fig. 21 shows a translation table and constellation points according to the first embodiment.
Fig. 22 shows a translation table and constellation points according to the first embodiment.
Fig. 23 shows a translation table and constellation points according to the first embodiment.
Fig. 24 shows a translation table and constellation points according to the first embodiment.
Fig. 25 shows a translation table and constellation points according to the first embodiment.
Fig. 26 shows a translation table and constellation points according to the first embodiment.
Fig. 27 is constellation diagram occurring when coding according to the related-art 3GPP standard is employed.
Fig. 28 is constellation diagram occurring when coding according to the related-art 3GPP standard is employed.
Fig. 29 is a table showing correspondence between the constellation points occurring when coding according to the related-art 3GPP standard is employed and constellation points occurring when coding according to the first embodiment is used.
Fig. 30 is a diagram illustrating a noise margin occurring when coding according to the related-art 3GPP standard is employed.
Fig. 31 is a diagram illustrating a noise margin occurring when coding according to the first embodiment is employed.
Fig. 32 shows a translation table and constellation points according to the related-art 3GPP standard.
Fig. 33 shows a translation table and constellation points according to a second embodiment.
Fig. 34 shows a translation table and constellation points according to the related-art 3GPP standard.
Fig. 35 shows a translation table and constellation points according to the second embodiment.

### BEST MODE OF CARRYING OUT THE INVENTION

Various embodiments of the present invention will now be described with reference to the attached drawings.

### First embodiment

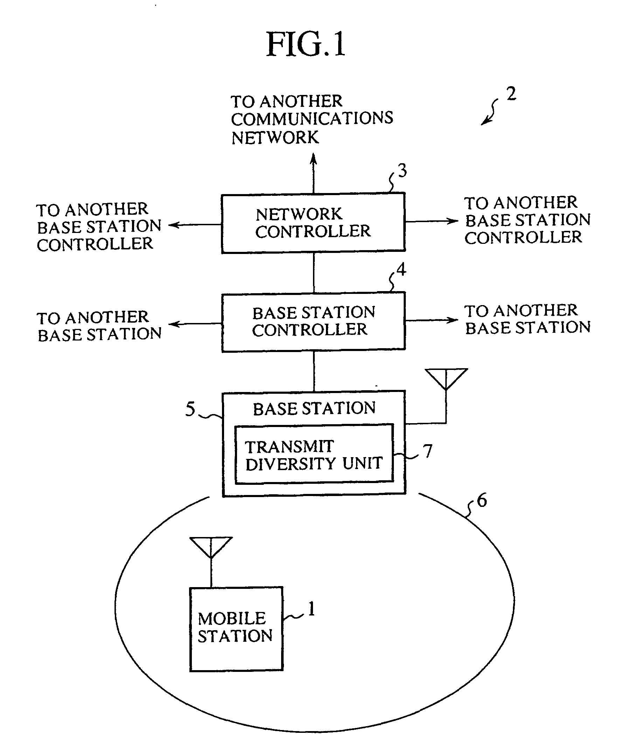

Fig. 1 is a schematic diagram showing an overall configuration of a W-CDMA mobile communication system in which a CDMA transmit diversity unit according to the invention is used. The W-CDMA mobile communication system includes a mobile station 1 and a base station system 2. Characters, still pictures and moving pictures are transmitted over a W-CDMA system between the mobile stations 1 or between the mobile station 1 and another communication unit (server or the like). In this case, the base station system 2 functions as a relay system.

More specifically, the mobile station 1 may be a portable telephone set or a portable computer equipped with radio/wire communication facilities. The mobile station 1 demodulates a CDMA signal transmitted from the base station system 2 so as to restore voice, characters, still pictures and moving pictures for presentation to a user. The mobile station 1 also produces a CDMA signal that includes voice, characters, still pictures and moving pictures so as to transmit the resultant CDMA signal to the base station system 2.

The base station system 2 includes a network controller 3 connected to another communications network, a base station controller 4 connected to the network controller 3 and a base station 5 connected to the base station controller 4. The base station 5 covers a communication area 6 in which it is a host. The base station 5 communicates with the mobile station 1 in the communication area 6. In this case, the base station 5 is provided with the function of transmitting and receiving a CDMA signal. The base station controller 4 controls a plurality of base stations 5. For example, the base station controller 4 directs the mobile station 1 to a different base station 5 for communication therewith as the mobile station 1 travels.The network controller 3 is responsible for routing control and the like.

Since a wireless circuit connects the base station 5 and the mobile station 1 which may travel, the CDMA signal arriving at the mobile station 1 is more easily affected by environment as compared to that of lined transmission. As a result, the mobile station 1 may not be able to restore voice and the like properly from the incoming CDMA signal. For this reason, transmit diversity is introduced in the base station 5 according to the first embodiment in order to allow the mobile station 1 to restore voice and the like more properly.

More specifically, the base station 5 is provided with a transmit diversity unit 7. The transmit diversity 7 is provided with two transmission units (not shown) for respective systems. Transmission data are branched before being input to the two transmission units. Each of the transmission units subjects the transmission data to predetermined coding. The coded data are subject to spreading and quadrature modulation so that a CDMA signal is produced. Accordingly, the mobile station 1 receives the two CDMA signals combined transmitted from the two transmission units.

Each of the transmission units produces CDMA signals so that the combined signals containing the same content are timed to arrive at different points of time at the mobile station 1. Thus, the base station 5 performs time-difference diversity. Since the mobile station 1 is capable of receiving the combined signals of the same content at different points of time, the mobile station 1 may employ one of the combined signals as a received signal or combine the two combined signals by effecting timing control. As a result, the mobile station 1 is capable of restoring speech and the like properly.

The transmit diversity unit 7 codes the transmission data so that constellation points of the combined signal received by the mobile station 1 are substantially evenly distributed in a constellation diagram, unlike the coding according to the 3GPP standard. The phase of the combined signal has a real component (I component) and an imaginary component (Q component) so that the constellation points are distributed in an I-Q plane. The transmit diversity unit 7 codes the transmission data so that the constellation points of the combined signal are substantially evenly distributed in an I-Q plane. By ensuring that the distribution is substantially even, a noise margin is enlarged as compared to a case where the coding is performed in accordance with the related-art 3GPP standard. Accordingly, the bit error rate is prevented from becoming unfavorable. Thereby, the quality of communication is improved.

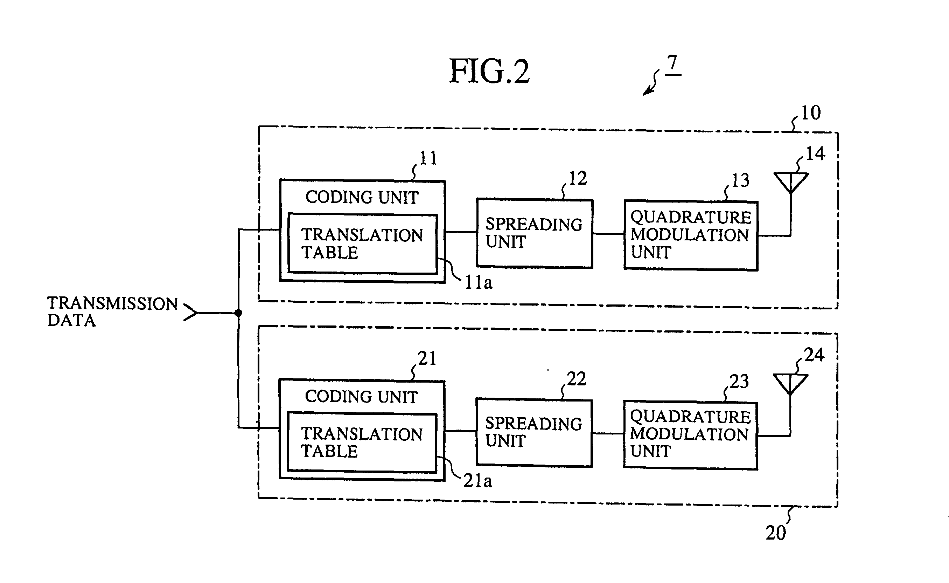

Fig. 2 is a functional block diagram showing a configuration of the transmit diversity unit 7. The transmit diversity unit 7 includes two transmission units 10 and 20. The transmission data subject to branching are fed to the transmission units 10 and 20. The transmission unit 10 comprises a coding unit 11, a spreading unit 12, a quadrature modulation unit 13 and a transmission antenna 14. The transmission unit 20 comprises a coding unit 22, a spreading unit 22, a quadrature modulation unit 23 and a transmission antenna 24.

In the first embodiment, the spreading unit 12, the quadrature modulation unit 13, and the transmission antenna 14 operate as means for transmitting a CDMA signal according to a first symbol timing. The spreading unit 22, the quadrature modulation unit 23, and the transmission antenna 24 operate as means for transmitting at a second symbol timing.

The coding units 11 and 21 produce transmission codes by coding the transmission data. More specifically, the coding units 11 and 21 are provided with translation tables 11a and 21a, respectively, so as to perform coding in accordance with the translation tables 11a and 21a. The transmission codes are then supplied to the spreading units 12 and 22. The spreading units 12 and 22 use the same spreading codes to spread the transmission codes. As a result, the spread signals are produced.

The spread signals are then supplied to the quadrature modulation units 13 and 23. The quadrature modulation units 13 and 23 subject the spread signals to 16QAM. As a result, two CDMA signals are produced. The CDMA signals are then transmitted as radio signals via the transmission antennas 14 and 24.

As described, the transmit diversity unit 7 employs 16QAM as a quadrature modulation scheme. 16QAM is known as an M-ary coding modulation scheme whereby 4 data are transmitted simultaneously. The transmit diversity unit 7 performs transmit diversity as described above and transmits the CDMA signals at respective timings. Accordingly, transmission of a total of 8-bit transmission data occurs at two separated points of time. In the base station 5 according to the first embodiment, the 8-bit transmission data {b0,b1,b2,b3,b4,b5,b6,b7} are supplied to the transmission units 10 and 20.

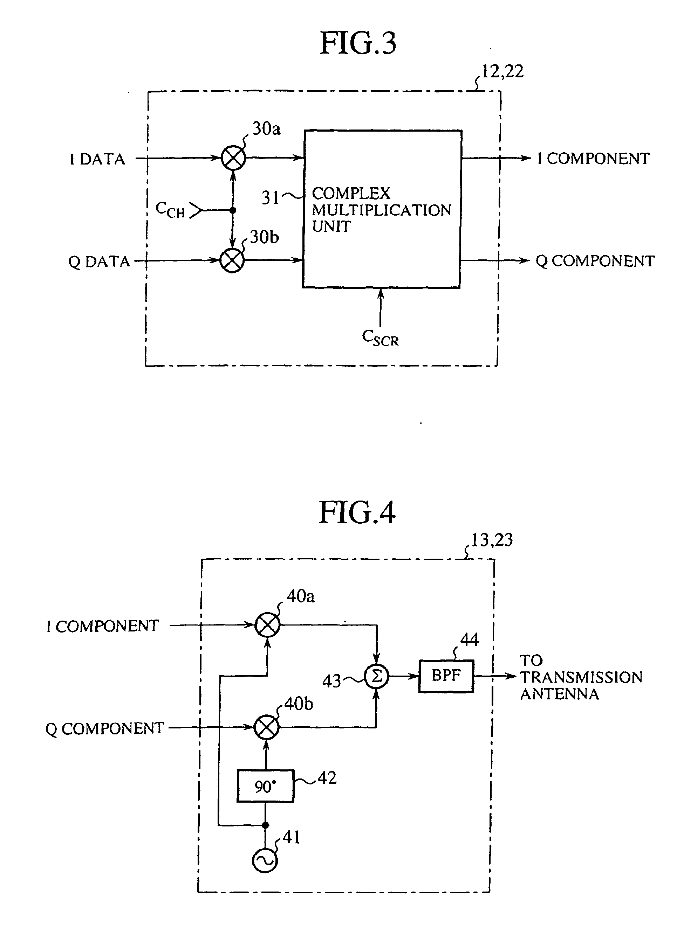

Fig. 3 is a block diagram showing a configuration of the spreading units 12 and 22. Each of the spreading units 12 and 22 receives the I data and the Q data of the transmission codes and outputs the spread signals. More specifically, each of the spreading units 12 and 22 is provided with two multiplication units 30a and 30b. The I data and the Q data are supplied to the multiplication units 30a and 30b, respectively. The multiplication units 30a and 30b are supplied with a common channel identification code C_{CH}. The multiplication unit 30a multiplies the I data by the channel identification code C_{CH}. The multiplication unit 30b multiplies the Q data by the channel identification code C_{CH}. The results of multiplication are supplied to a complex multiplication unit 31. The complex multiplication unit 31 is supplied with a base station identification code C_{SCR}· The complex multiplication unit 31 multiplies the results of multiplication by the base station identification code C_{SCR} so as to output respective results as the I component and the Q component of the spread signal.

Fig. 4 is a block diagram showing a configuration of the quadrature modulation units 13 and 23. Each of the quadrature modulation units 13 and 23 receives the I component and the Q component of the spread signal and outputs a CDMA signal. More specifically, each of the quadrature modulation units 13 and 23 is provided with two multiplication units 40a and 40b. The multiplication units 40a and 40b are supplied with the I component and the Q component of the spread signal, respectively. Each of the quadrature modulation units 13 and 23 is also provided with a carrier generation unit 41. The carrier generation unit 41 supplies a carrier signal of a predetermined frequency to the multiplication unit 40a and supplies a carrier signal having its phase shifted by 90 degrees by a 90-degree phase shifting unit 42 to the other multiplication unit 40b. The multiplication unit 40a multiplies the I component of the spread signal by the carrier signal. The multiplication unit 40b multiplies the Q component by the 90-shifted carrier signal. The results of multiplication are added in an adder 43. The result of addition is output as a CDMA signal to the transmission antenna 14 via a bandpass filter (BPF) 44.

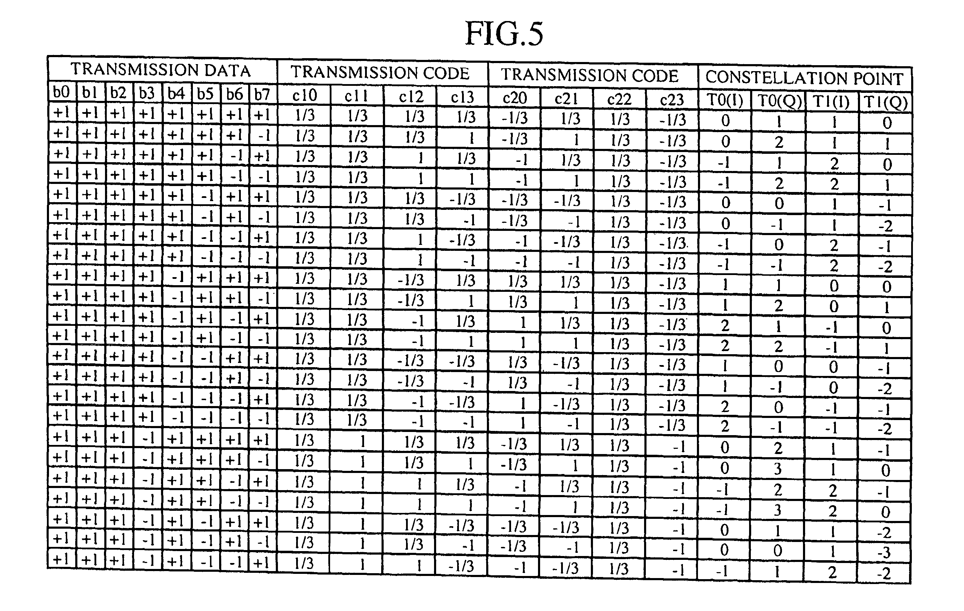

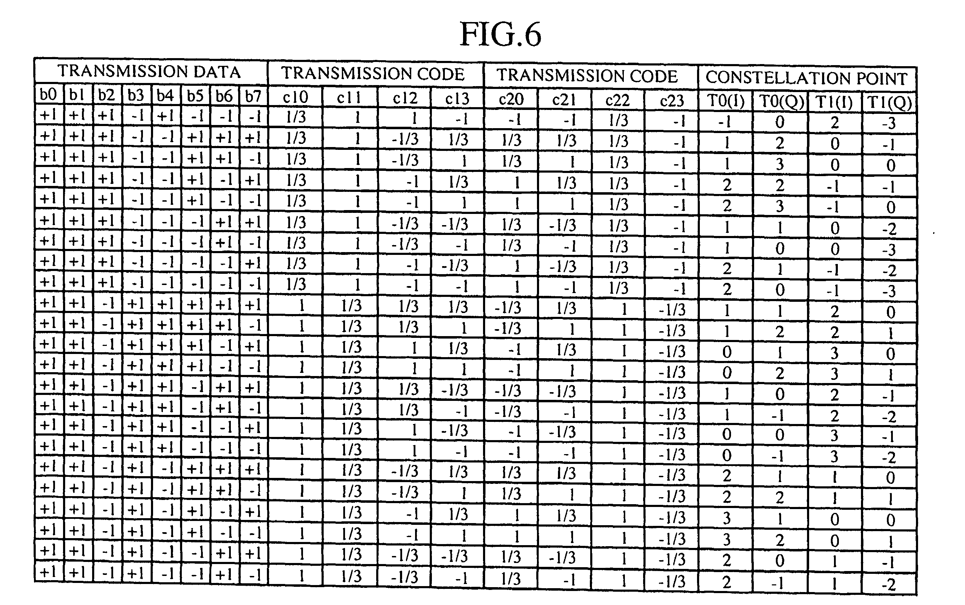

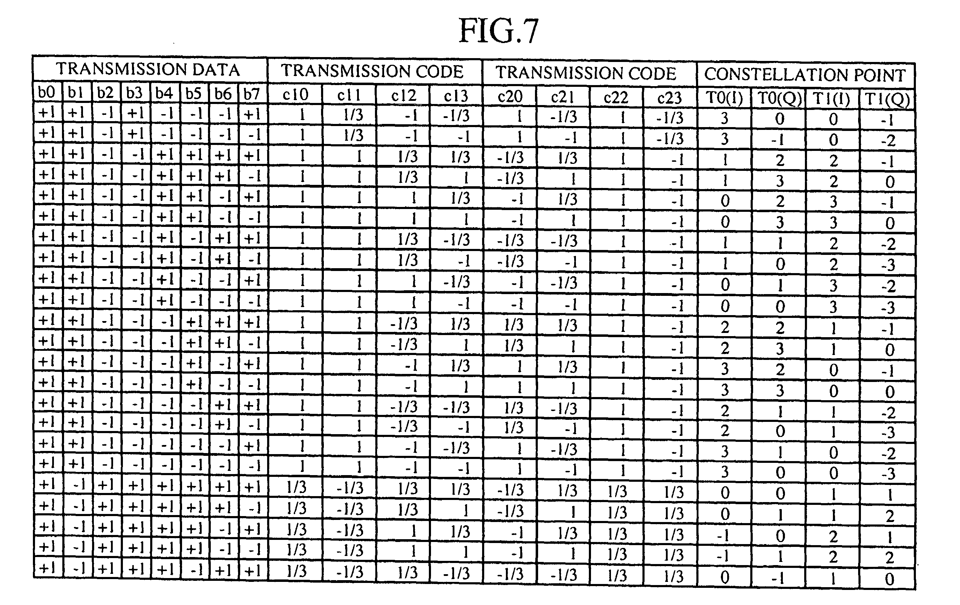

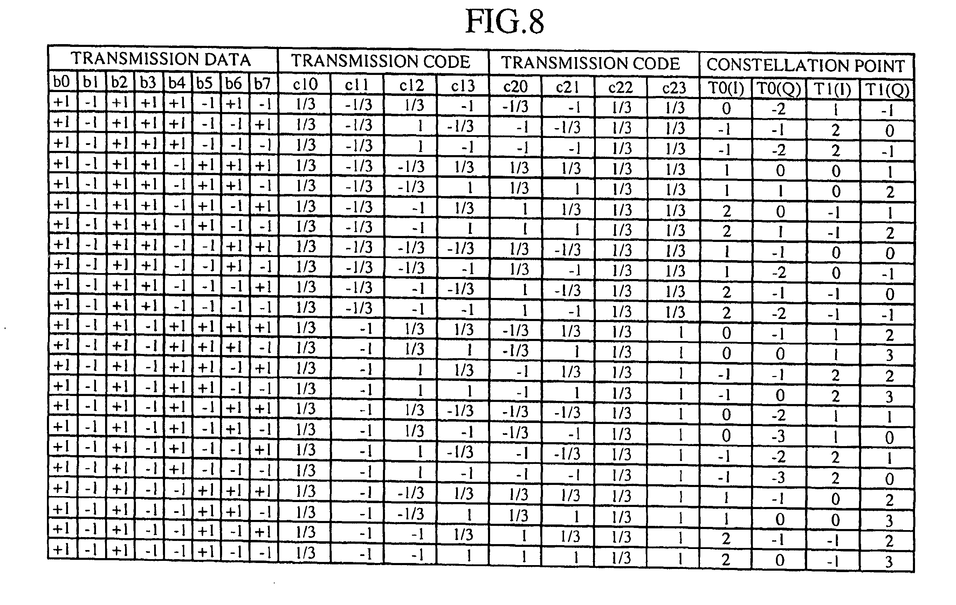

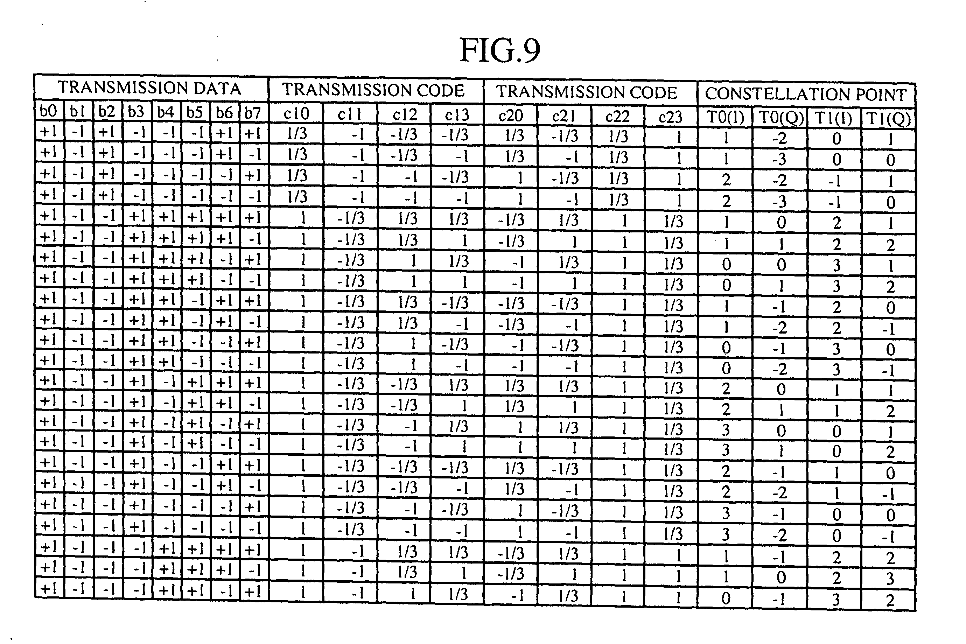

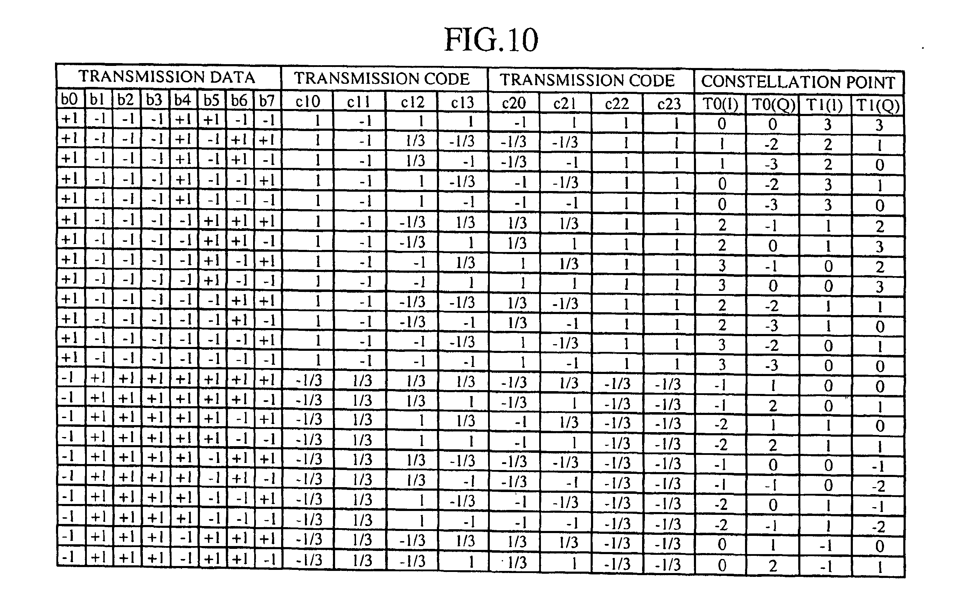

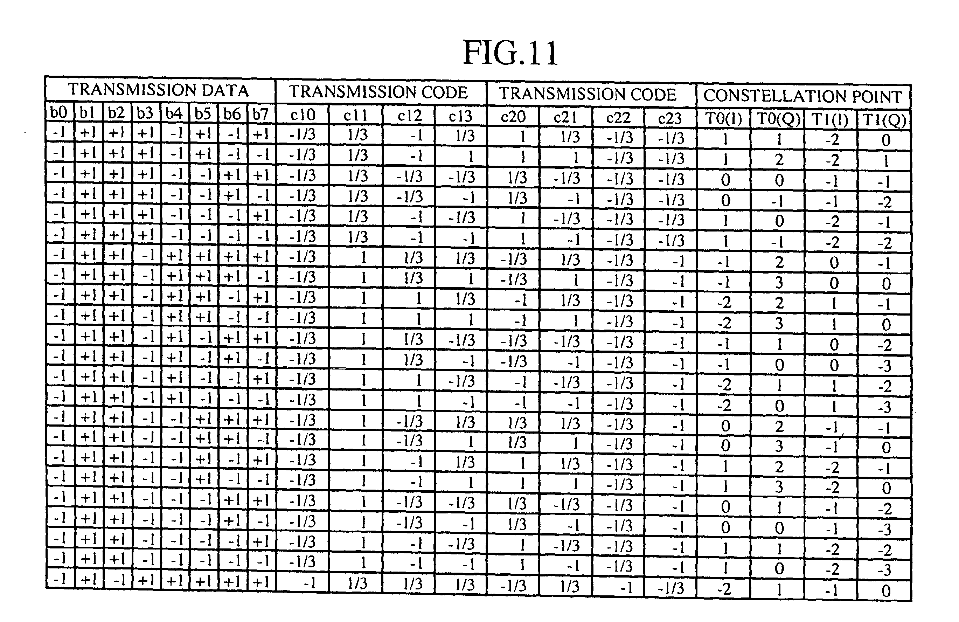

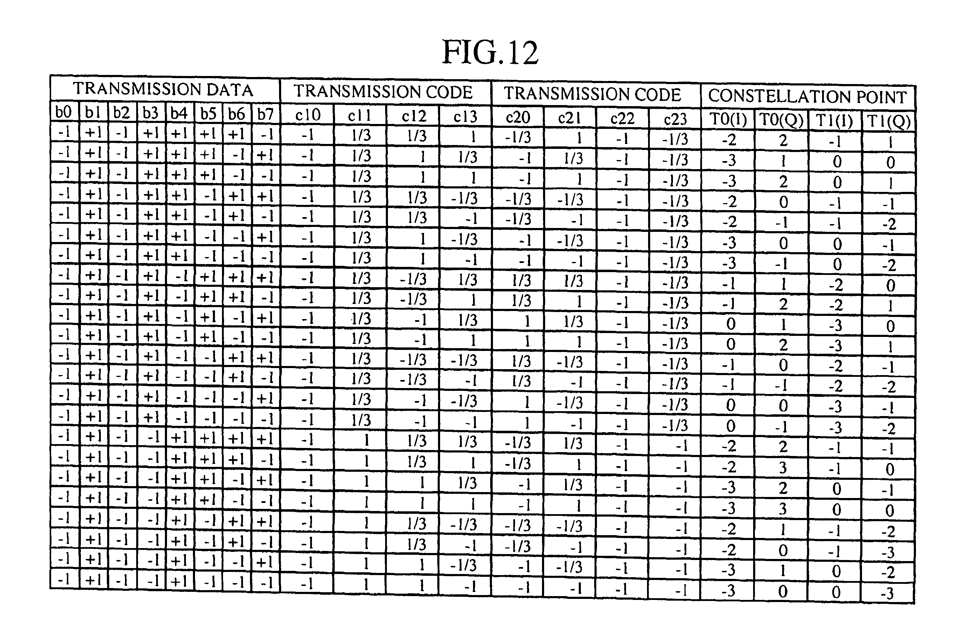

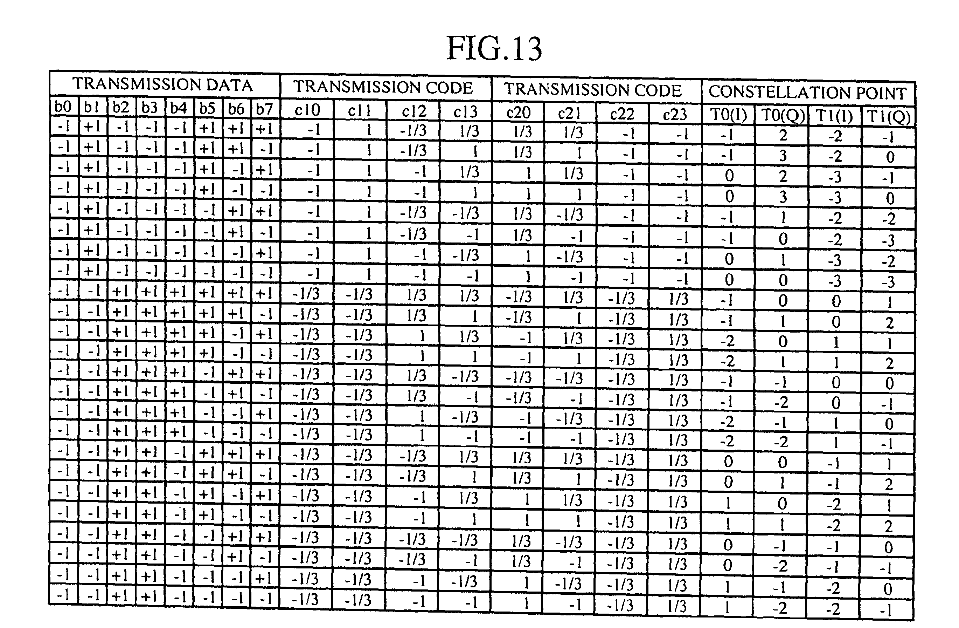

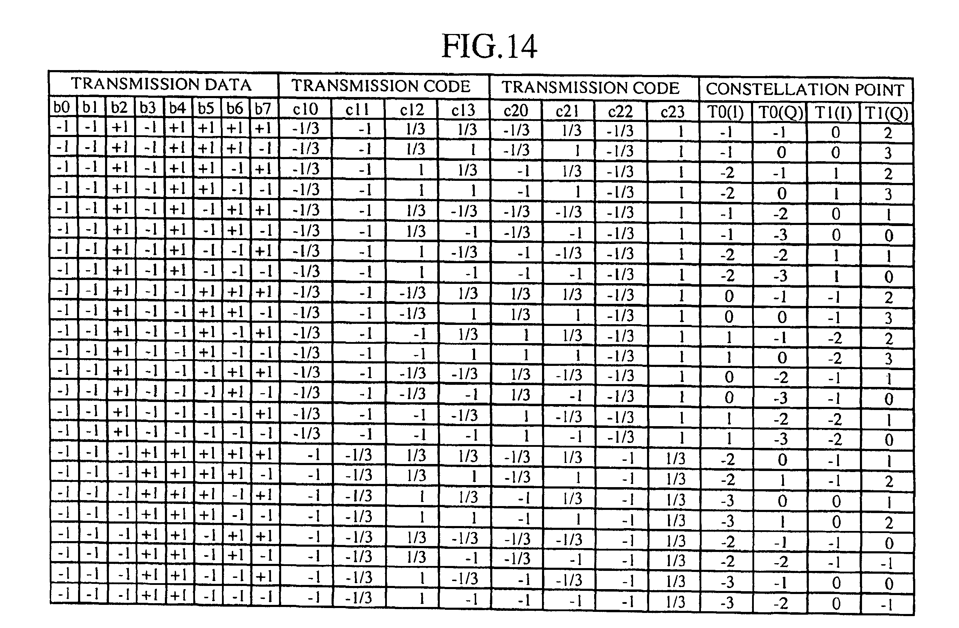

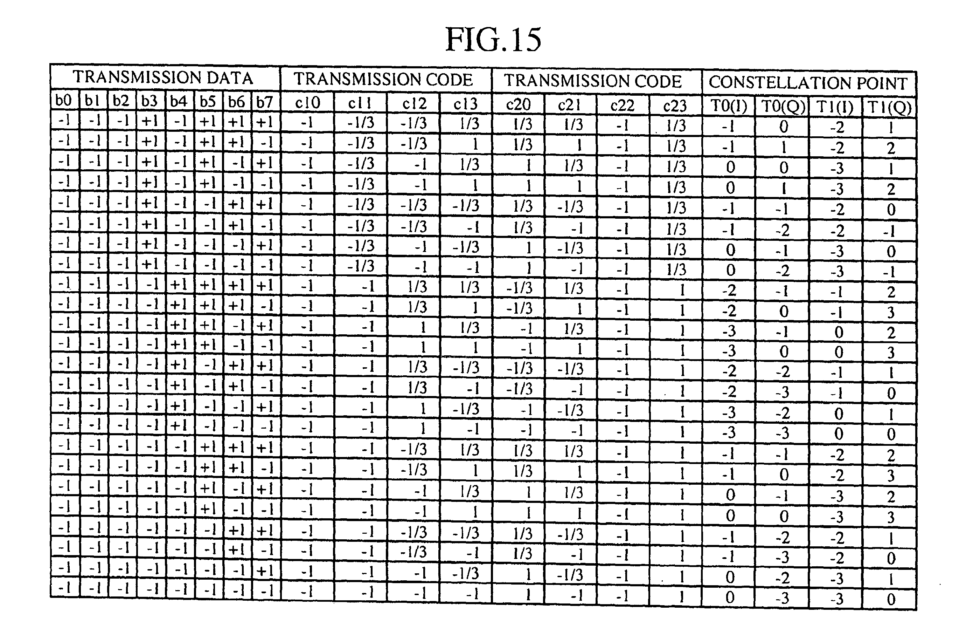

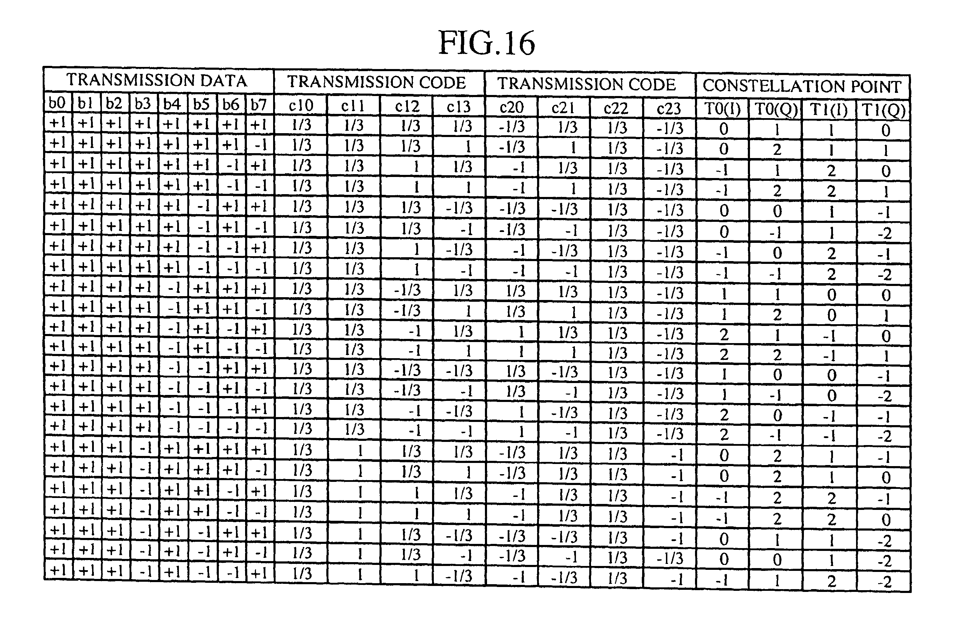

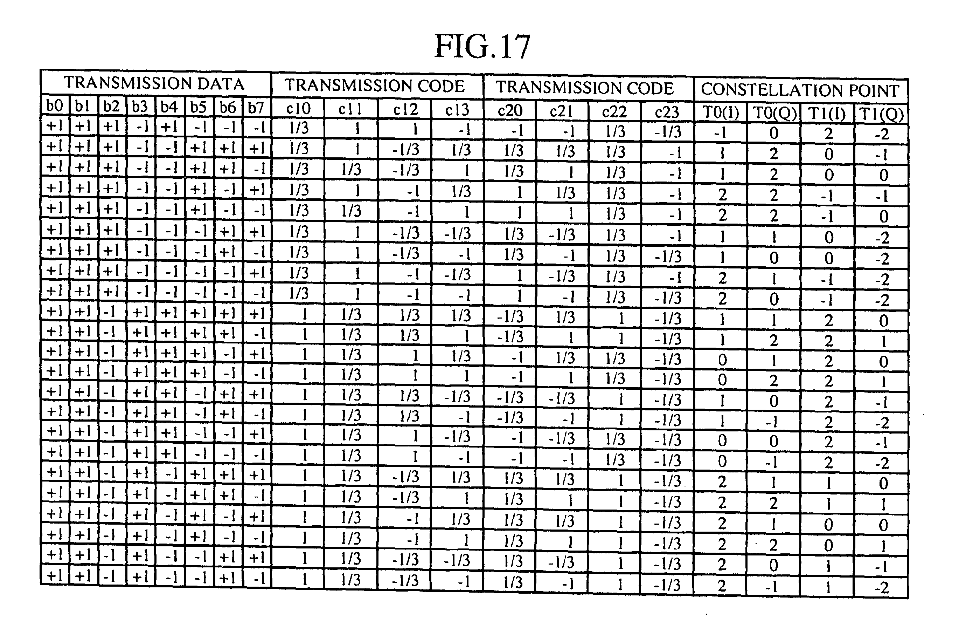

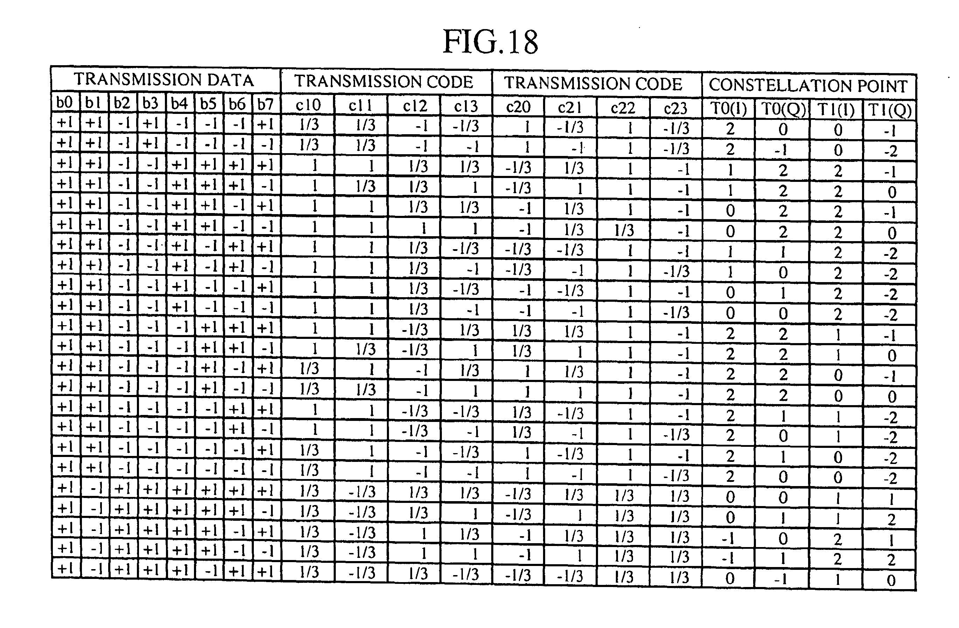

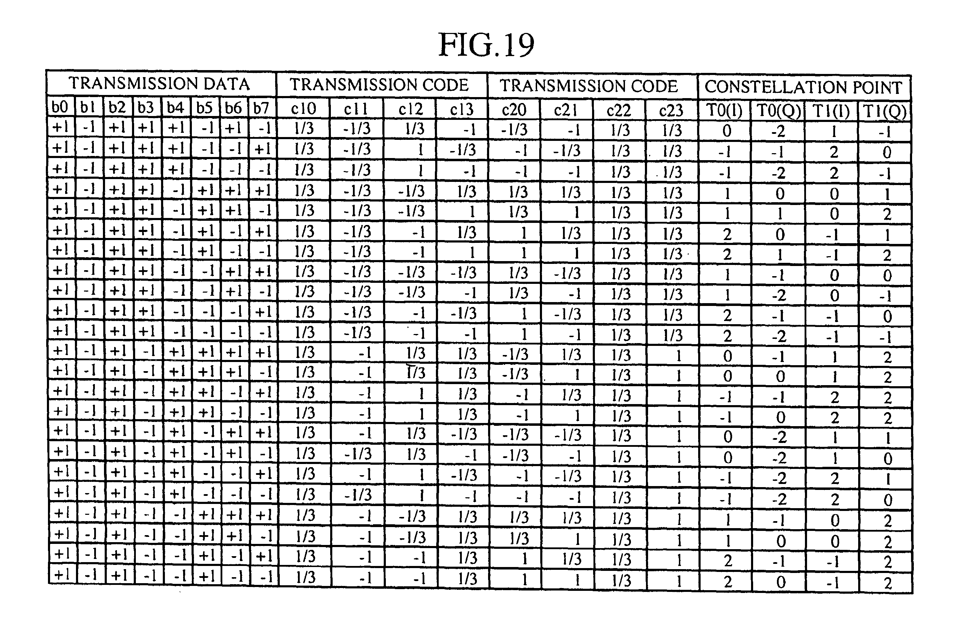

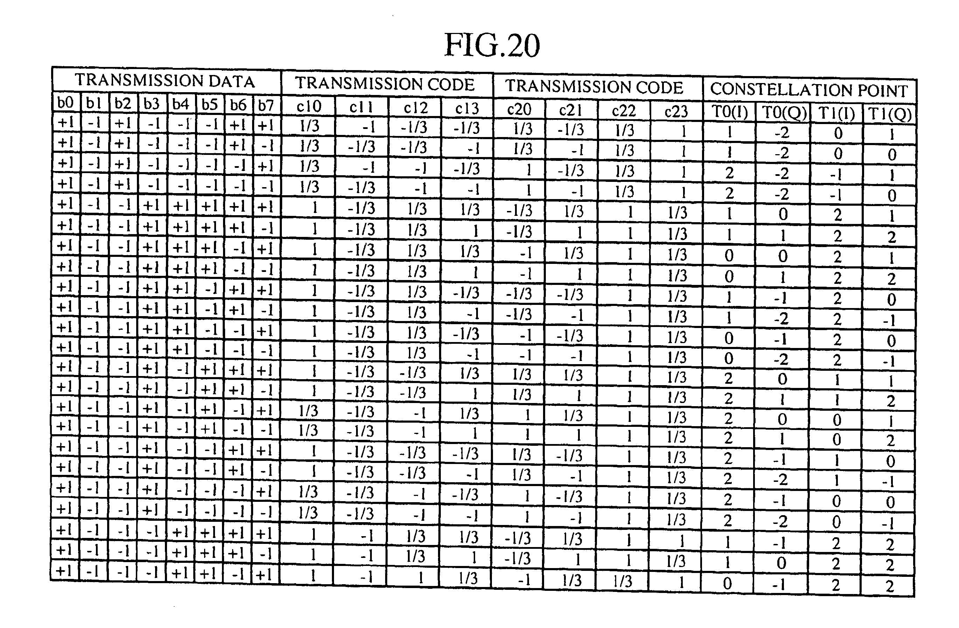

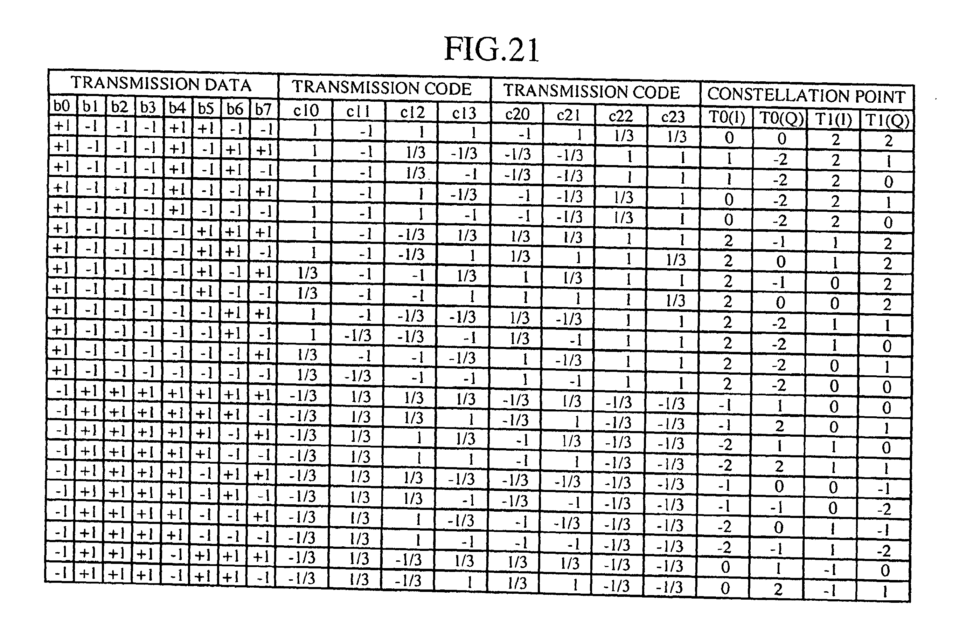

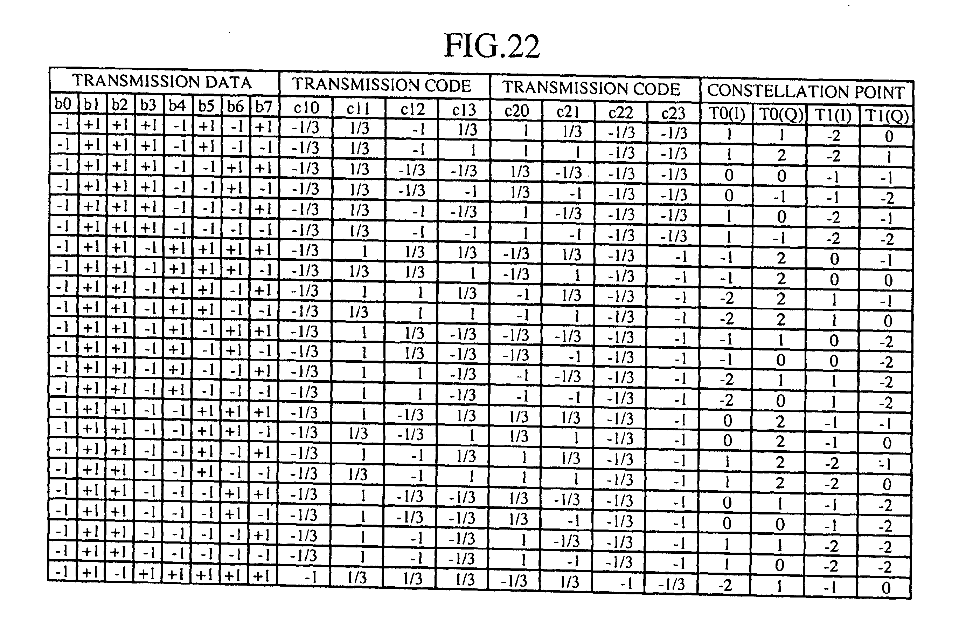

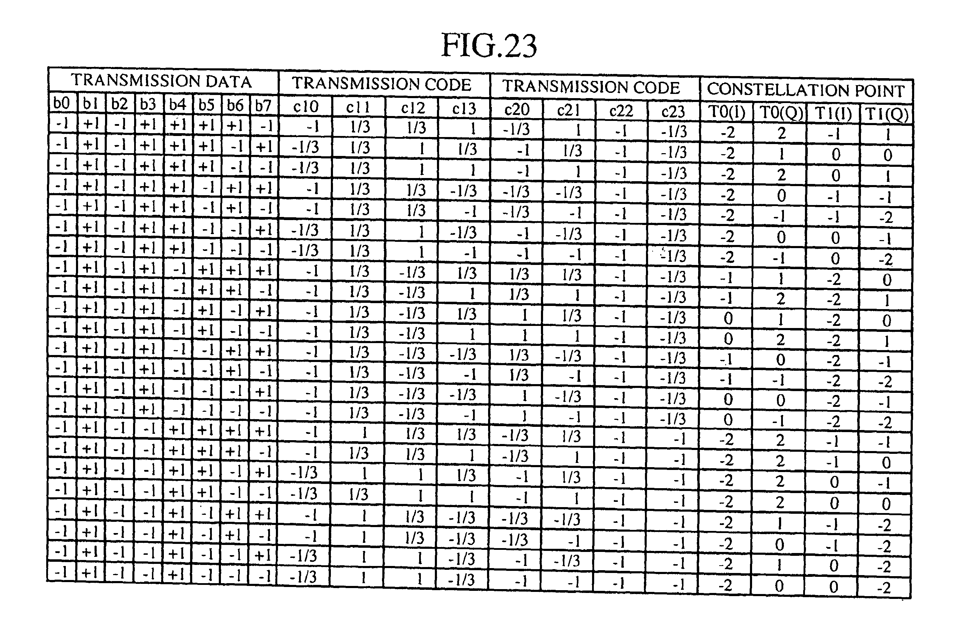

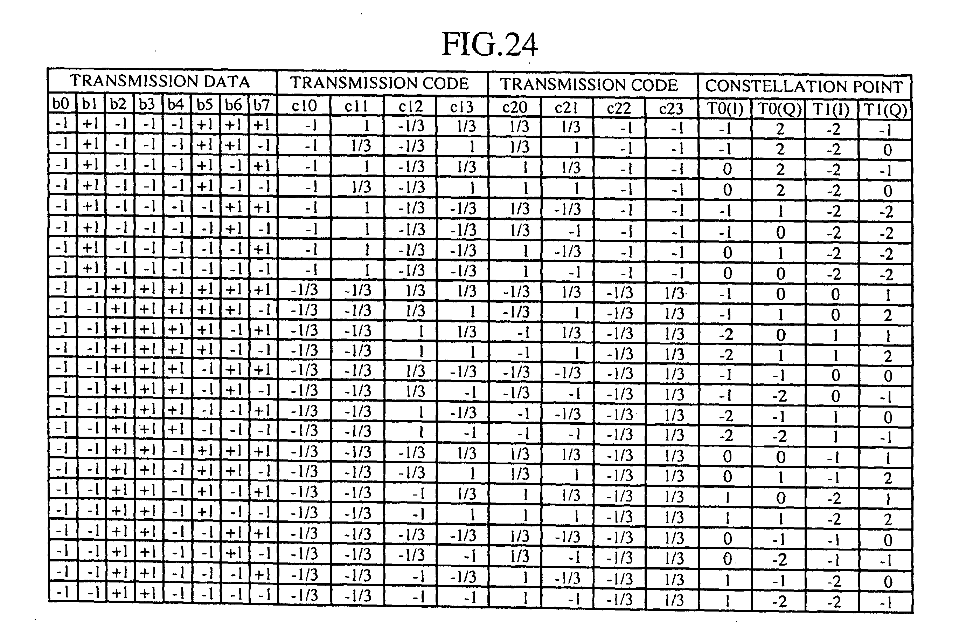

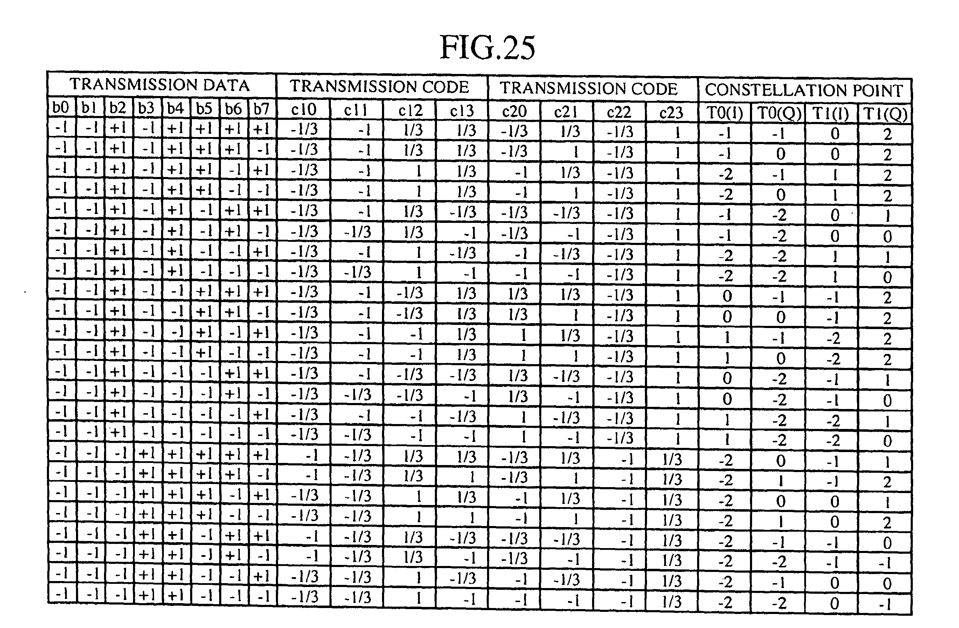

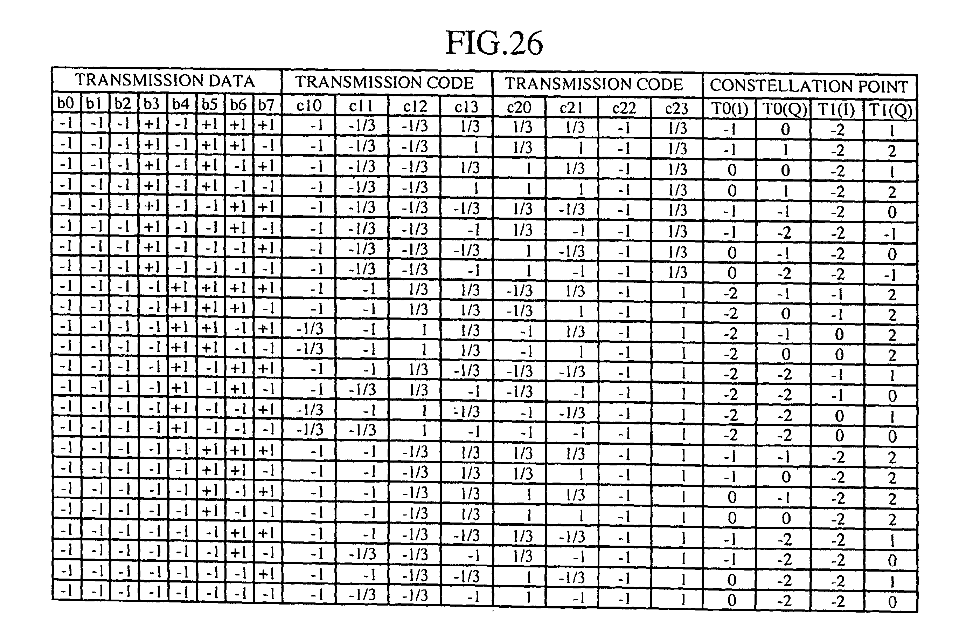

Figs. 5-15 show translation tables and constellation points according to the related-art 3GPP standard coding. Figs. 16-26 show translation tables and constellation points according to the coding of the first embodiment. A coding process in the coding units 11 and 12 will now be described by referring to Figs. 5 through 26.

The coding unit 11 translates the first 4 bits {b0,b1,b2,b3} of the transmission data {b0,b1,b2,b3,b4,b5,b6,b7} into first transmission codes {c10,c11} comprising 2 bits and translates the last 4 bits {b4,b5,b6,b7} into second transmission codes {c12,c13} comprising 2 bits. The coding unit 11 supplies the first transmission codes {c10,c11} and the second transmission codes {c12,c13} as IQ data to the spreading unit 12 responsive to the first symbol timing t1 and the second symbol timing t2, respectively.

The second symbol timing t2 occurs after a predetermined period of time elapses since the first symbol timing t1. The term "first" of the first transmission codes is derived from the fact that it responds to the first symbol timing t1. The term "second" of the second transmission codes is derived from the fact that it responds to the second symbol timing t2.

The coding unit 21 translates the first 4 bits {b0,b1,b2,b3} of the transmission data {b0,b1,b2,b3,b4,b5,b6,b7} into first transmission codes {c20,c21} comprising 2 bits and translates the last 4 bits {b4,b5,b6,b7} into second transmission codes {c22,c23} comprising 2 bits. The coding unit 21 supplies the first transmission codes {c20,c21} and the second transmission codes {c22,c23} as IQ data to the spreading unit 22 responsive to the first symbol timing t1 and the second symbol timing t2, respectively.

The coding units 11 and 21 supply the first transmission codes {c10,c11} and {c20,c21}, respectively, as IQ data to the spreading units 12 and 22, respectively, responsive to the first symbol timing t1. Therefore, the CDMA signals transmitted from the transmission units 10 and 20 responsive to the first symbol timing t1 includes as IQ data the first transmission codes {c10,c11} and {c20,c21}, respectively. Thus, the constellation points T1 (I,Q) of the combined signal derived from these two CDMA signals are {c10+c20,c11+c21}.

The CDMA signals transmitted from the transmission units 10 and 20 responsive to the second symbol timing t2 includes as IQ data the second transmission codes {c12,c13} and {c22,c23}, respectively. Thus the constellation points T2 (I,Q) of the combined signal derived from these two CDMA signals are {c12+c22,c13+c23}.

The transmit diversity unit 7 codes the transmission data such that the constellation points T1(I,Q) and T2(I,Q) (generically referred to as T(I,Q)) are substantially evenly distributed for the entirety of patterns of the 8-bit transmission data {b0,b1,b2,b3,b4,b5,b6,b7}.

More specifically, the coding units 11 and 21 codes the transmission data such that the constellation points T(I,Q) into which are mapped (according to the invention) the transmission data of a bit pattern prescribed to be mapped into outermost constellation points in the constellation diagram according to the related-art 3GPP standard, coincide with the constellation points T(I,Q) into which are mapped (according to the invention) the transmission data of a bit pattern prescribed to be mapped into constellation points one step inward from the outermost points according to the related-art 3GPP standard.

In other words, the coding units 11 and 21 translate the transmission data, of a pattern prescribed to be mapped into the outermost constellation points in the constellation diagram according to the 3GPP standard, into the transmission codes such that the resultant constellation points are distributed one step inward from the outermost points.

Each bit comprising the transmission data {b0,b1,b2,b3,b4,b5,b6,b7} according to the first embodiment may take either of two values {+1,-1}. Each bit comprising the transmission codes {c10,c11,c12,c13} and {c20,c21,c22,c23} represents an amplitude/phase in 16QAM described later and takes any of a set of 4 values {+1,+1/3,-1/3,-1}.

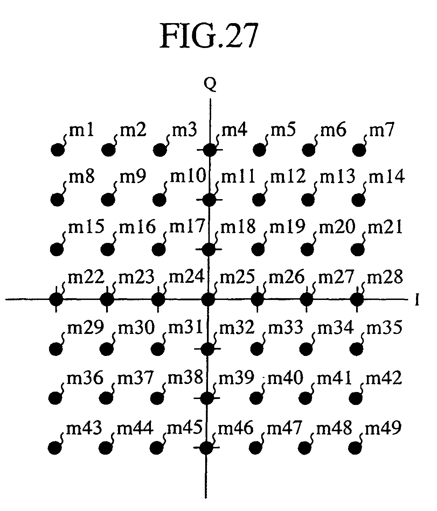

The bits comprising the transmission codes {c10,c11,c12,c13} and {c20,c21,c22,c23} produce patterns shown in Figs. 5 through 15 when the above transmission data is coded according to the related-art 3GPP standard. Therefore, each of the constellation points T(I,Q) takes any of a set of values {-3,-2,-1,0,+1,+2,+3}. The constellation points T(I,Q) exhibit a pattern shown in Fig. 27. More specifically, the constellation points T(I,Q) exhibit a square distribution in the I-Q plane around (0,0). Further, the constellation points T(I,Q) occur on three square frames formed around (0,0), and at (0,0).

The constellation points T(I,Q) produced as a result of the related-art 3GPP standard coding are relatively unevenly distributed. More specifically, 1 of a total of 256 bit patterns of the transmission data is mapped into each of the constellation points m1, m7, m43, m49 at the corners of the outermost frame. 2 of a total of 256 bit patterns of the transmission data are mapped into each of the adjacent constellation points m2, m6, m8, m14, m36, m42, m44 and m48. 3 of a total of 256 bit patterns of the transmission data are mapped into each of the constellation points m3, m5, m15, m21, m29, m35, m45, m47. 4 of a total of 256 bit patterns of the transmission data are mapped into each of the constellation points m4, m9, m13, m22, m28, m37, m41, m46. 6 of a total of 256 bit patterns of the transmission data are mapped into each of the constellation points m10, m12, m16, m20, m30, m34, m38 and m40. 8 of a total of 256 bit patterns of the transmission data are mapped into each of the constellation points m11, m23, m27 and m39. 9 of a total of 256 bit patterns of the transmission data are mapped into each of the constellation points m17, m19, m31 and m33. 12 of a total of 256 bit patterns of the transmission data are mapped into each of the constellation points m18, m24, m26 and m32. 16 of a total of 256 bit patterns of the transmission data are mapped into each of the constellation point m25. Thus, the constellation points are relatively unevenly distributed in terms of correspondence with the transmission data.

In contrast, the coding units 11 and 21 according to the first embodiment code the transmission data such that the constellation points T(I,Q) are relatively evenly distributed. More specifically, the coding units 11 and 21 code the transmission data such that the bits comprising the transmission codes {c10,c11,c12,c13} and {c20,c21,c22,c23} produce patterns shown in Figs. 16 through 26.

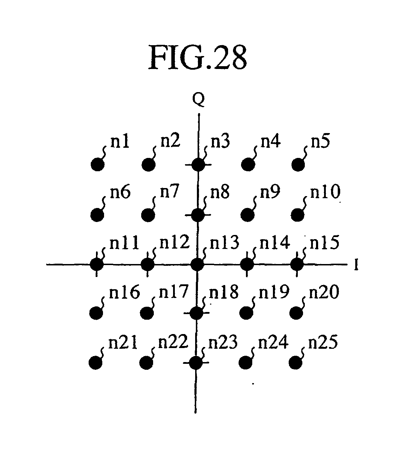

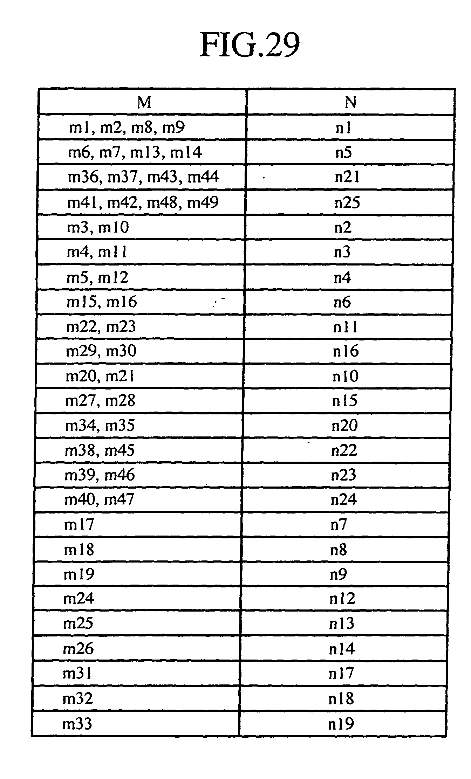

With this, the IQ data of the constellation points T1(I,Q) and T2(I,Q) takes any of a set of values {-2,-1,0,+1,+2} so that the constellation points T(I,Q) are substantially evenly distributed as shown in Fig. 28. More specifically, as shown in Fig. 29, the coding units 11 and 21 code the transmission data such that the transmission data mapped into constellation points M according to the related-art 3GPP standard are coded according to the first embodiment so as to be mapped into constellation points N.

More specifically, the coding units 11 and 21 code the transmission data such that the transmission data of a pattern mapped into constellation points T(I,Q) at (-3,+3), (-2,+3) and (-3,+2) according to the related-art 3GPP standard are mapped into (-2,+2). The coding units 11 and 21 code the transmission data such that the transmission data of a pattern mapped into constellation points T(I,Q) at (+2,+3), (+3,+3) and (+3,+2) according to the related-art 3GPP standard are mapped into (+2,+2).

The coding units 11 and 21 code the transmission data such that the transmission data of a pattern mapped into constellation points T(I,Q) at (-3,-2), (-3,-3) and (-2,-3) according to the related-art 3GPP standard, are mapped into (-2,-2). The coding units 11 and 21 code the transmission data such that the transmission data, of a pattern mapped into constellation points T(I,Q) at (+3,-2), (+2,-3) and (+3,-3) according to the related-art 3GPP standard are mapped into (+2,-2).

The coding units 11 and 21 code the transmission data such that the transmission data of a pattern mapped into constellation points T(I,Q) at (-1,+3), (0,+3) and (+1,+3) according to the related-art 3GPP standard are mapped into (-1,+2), (0,+2) and (+1,+2), respectively. Further, the coding units 11 and 21 code the transmission data such that the transmission data of a pattern mapped into constellation points T(I,Q) at (-3,+1), (-3,0) and (-3,-1) according to the related-art 3GPP standard are mapped into (-2,+1), (-2,0) and (-2,-1), respectively.

The coding units 11 and 21 code the transmission data such that the transmission data of a pattern mapped into constellation points T(I,Q) at (+3,+1), (+3,0) and (+3,-1) according to the related-art 3GPP standard are mapped into (+2,+1), (+2,0) and (+2,-1), respectively. Further, the coding units 11 and 21 code the transmission data such that the transmission data of a pattern mapped into constellation points T(I,Q) at (-1,-3), (0,-3) and (+1,-3) according to the related-art 3GPP standard are mapped into (-1,-2), (0,-2) and (+1,-2), respectively. The mapping into the remaining constellation points T(I,Q) remains unchanged.

As a result of the coding described above, 9 of a total of 256 bit patterns of the transmission data are mapped into each of the constellation points n1, n2, n4, n5, n6, n7, n9, n10, n16, n17, n19, n20, n21, n22, n24 and n25. 12 of a total of 256 bit patterns of the transmission data are mapped into each of the constellation points n3, n8, n11, n12, n14, n15, n18 and n23. 16 of a total of 256 bit patterns of the transmission data are mapped into each of the constellation point n13. It is ensured thus that the distribution of the constellation points T(I,Q) is even as compared to the distribution resulting from the coding according to the related-art 3GPP standard.

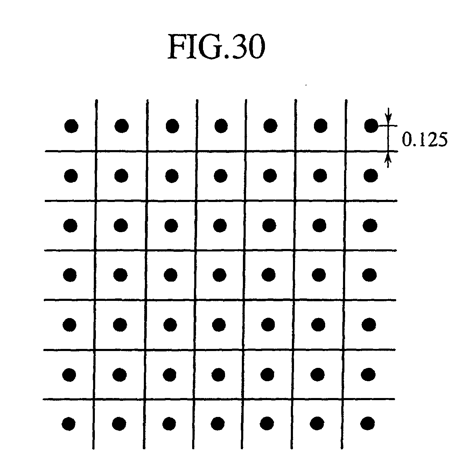

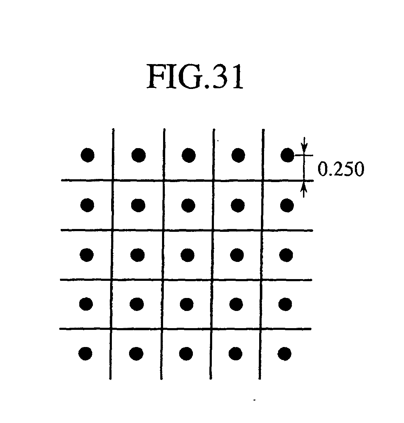

Fig. 30 is a diagram illustrating a noise margin occurring when coding according to the related-art 3GPP standard is employed. Fig. 31 is a diagram illustrating a noise margin occurring when coding according to the first embodiment is employed. A noise margin is a value corresponding to half the distance between adjacent constellation points. The greater the noise margin, the lower the bit error rate. The noise margin occurring when the coding according to the related-art 3GPP standard is employed is, for example, 0.125, as shown in Fig. 30. In contrast, the noise margin occurring when the coding according to the first embodiment is employed is, for example, 0.250, as shown in Fig. 31. The noise margin occurring when the coding according to the first embodiment is employed is twice that of the noise margin occurring when the coding according to the related-art 3GPP standard is employed.

As described, according to the first embodiment, the transmission data is coded so that the constellation points are substantially evenly distributed. Therefore, it is ensured that the noise margin is greater than that occurring when the coding according to the related-art 3GPP standard is employed. Accordingly, the bit error rate is reduced and the quality of communication is improved.

### Second embodiment

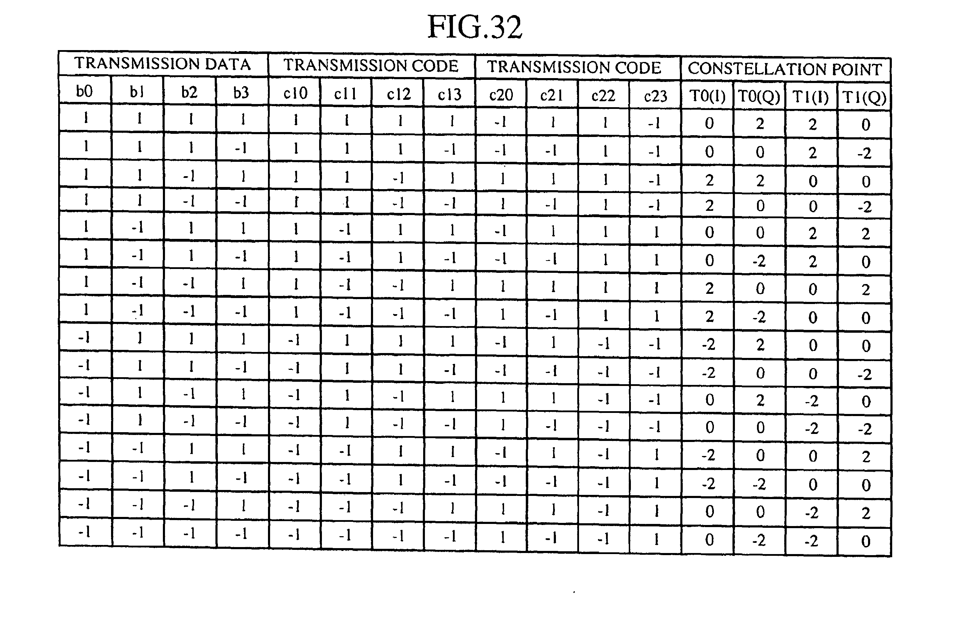

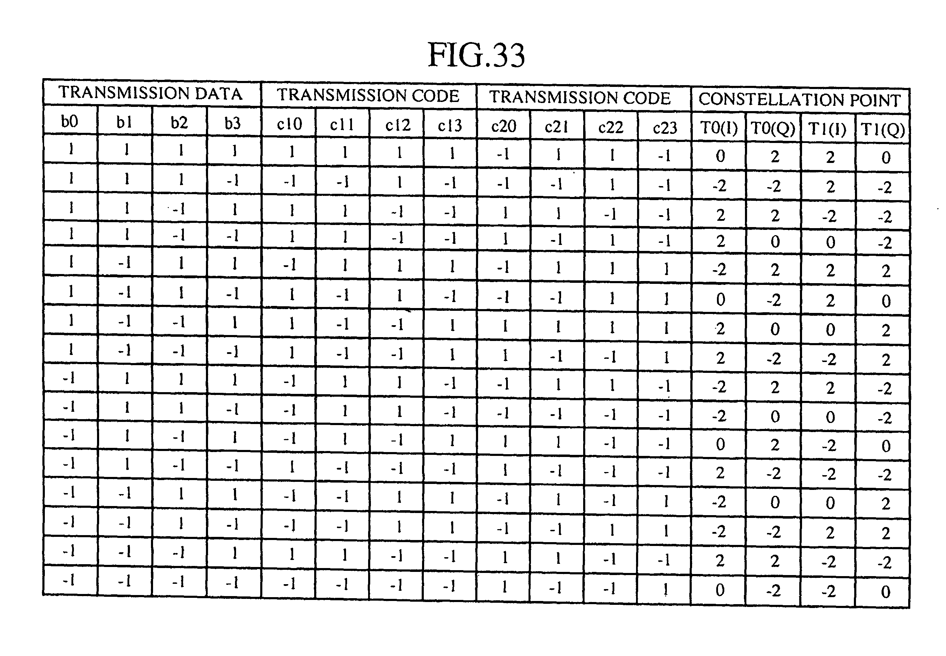

Fig. 32 shows a translation table and constellation points T(I,Q) according to the related-art 3GPP standard. Fig. 33 shows a translation table and constellation points T(I,Q) according to the second embodiment. In the following description, Figs. 1 and 2 will be referred to as required.

In the first embodiment, it is assumed that 16QAM is employed as a quadrature modulation scheme. In the second embodiment, it is assumed that QPSK is used as a quadrature modulation scheme.

The transmission units 10 and 20 according to the second embodiment are supplied with 4-bit transmission data {b0,b1,b2,b3}. The coding units 11 and 21 translate the transmission data into respective transmission codes. The coding units 11 and 21 code the transmission data such that the constellation points T(I,Q) of the combined signal received by the mobile station 1 at the receiving end are substantially evenly distributed.

More specifically, the coding unit 11 translates the transmission data {b0,b1,b2,b3} into the transmission codes {c10,c11,c12,c13}. The coding unit 11 supplies the first transmission codes {c10,c11} comprising two bits to the spreading unit 12 as IQ data, responsive to the first symbol timing t1. The coding unit 11 supplies the second transmission codes {c12,c13} different from the first transmission codes to the spreading unit 12 as IQ data, responsive to the second symbol timing t2.

The coding unit 21 translates the transmission data {b0,b1,b2,b3} into the transmission codes {c20,c21,c22,c23}. The coding unit 21 supplies the first transmission codes {c20,c21} comprising two bits to the spreading unit 22 as IQ data, responsive to the first symbol timing t1. The coding unit 21 supplies the second transmission codes {c22,c23} different from the first transmission codes to the spreading unit 22 as IQ data, responsive to the second symbol timing t2.

Like the first embodiment, with the configuration described above, the constellation points T1(I,Q) of the combined signal derived from the two CDMA signals transmitted responsive to the first symbol timing t1 are {c10+c20,c11+c21}. The constellation points T1(I,Q) of the combined signal derived from the two CDMA signals, transmitted responsive to the second symbol timing t2 are {c12+c22,c13+c23}.

As described above, the coding units 11 and 11 according to the second embodiment code the transmission data such that the values that the constellation points T(I,Q) take are substantially evenly distributed for the entirety of patterns of the 4-bit transmission data. More specifically, according to the coding units 11 and 21, the transmission data of a pattern prescribed to be mapped into a constellation point at (0,0) according to the related-art 3GPP standard are mapped into constellation points T(I,Q) of maximum absolute I, Q values occurring in the coding according to the related-art 3GPP standard.

More specifically, each of the bits comprising the transmission data {b0,b1,b2,b3} according to the second embodiment may take either of the two values {+1,-1}. Like the transmission data, each of the bits comprising the first transmission codes {c10,c11,c12,c13} and the second transmission codes {c20,c21,c22,c23} may take either of the two values {+1,-1}.

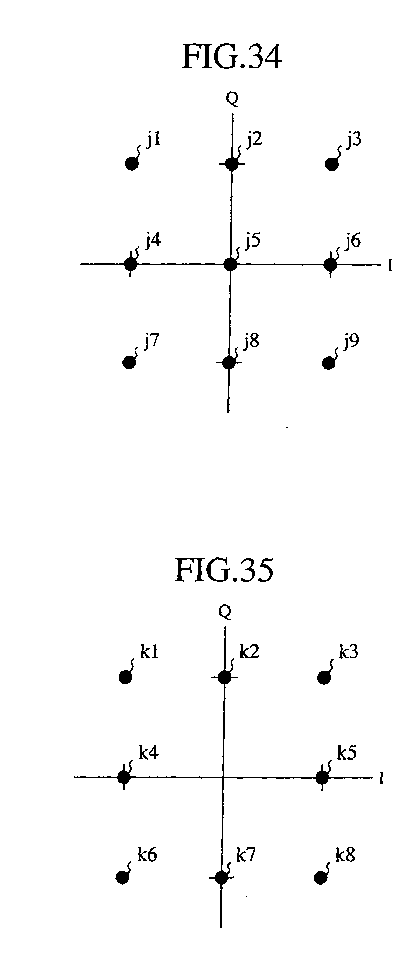

When the transmission data is coded according to the related-art 3GPP standard, the bits comprising the first transmission codes {c10,c11,c12,c13} and the second transmission codes {c20,c21,c22,c23} produce the pattern as shown in Fig. 32. As a result, the constellation points T(I,Q) exhibit patterns as shown in Fig. 32. Plotted in the I-Q plane, the constellation points T(I,Q) are as shown in Fig. 34. More specifically, the constellation points T(I,Q) are distributed in a 3×3 matrix aligned with the I-Q axes.

The constellation points T(I,Q) resulting from the coding according to the related-art 3GPP standard exhibit relatively uneven distribution. More specifically, 2 of a total of 16 bit patterns of the transmission data are mapped into each of the constellation points j1, j3, j7 and j9. 4 of a total of 16 bit patterns of the transmission data are mapped into each of the constellation points j2, j4, j6 and j8. 8 of a total of 16 bit patterns of the transmission data are mapped into the constellation point j5.

In contrast, the coding units 11 and 21 according to the second embodiment code the transmission data such that the constellation points T(I,Q) are relatively evenly distributed. More specifically, the coding units 11 and 21 code the transmission data so that the pattern shown in Fig. 33 is exhibited. With this, the constellation points T(I,Q) are substantially evenly distributed as shown in Fig. 35.

The coding units 11 and 21 code the transmission data such that the transmission data of a pattern prescribed to be mapped into a constellation point at (0,0) according to the related-art 3GPP standard are mapped into constellation points T(I,Q) of maximum absolute I, Q values.

More specifically, a total of 8 patterns are prescribed to be mapped into the constellation point (0,0) according to the related-art 3GPP standard transmission data coding. The coding units 11 and 12 code the transmission data such that 2 of the 8 patterns are mapped into each of 4 constellation points of maximum absolute I, Q values. That is, the coding units 11 and 12 code the transmission data such that 4 groups of constellation points, into each of which are mapped 2 patterns mapped, are distributed at (-2,+2), (+2,+2), (-2,-2) and (+2,-2).

As a result of the coding as described above, the constellation points are distributed at 8 points k1-k8 excluding (0,0). 4 of a total of 16 bit patterns of the transmission data are mapped into each of the constellation points k1-k8. Accordingly, the distribution of the constellation points T(I,Q) according to the second embodiment is relatively even as compared to the distribution according to the related-art 3GPP coding.

As described, according to the second embodiment, the constellation points T(I,Q) are distributed at 8 points k1-k8 excluding (0,0), thereby producing the capability of accepting nonlinear distortion around 0. Consequently, improvement in the bit error rate is expected. Since nonlinear distortion around 0 is acceptable, a relatively inexpensive amplifier for amplifying a CDMA signal may be used.

In the above description, it is assumed that the constellation points prescribed to occur at (0,0) in the I-Q plane according to the related art are shifted to points of maximum absolute I, Q values. Alternatively, the transmission data of a pattern prescribed to be mapped into points other than those of maximum absolute I, Q values in the plane according to the related-art 3GPP standard may also be mapped into points of maximum absolute I, Q values. With this, 8 of a total of 16 bit patterns of the transmission data are mapped into a single point of maximum absolute I, Q values in the I-Q plane. As a result, it is ensured that the distribution of constellation points is even. The capability of accepting nonlinear distortion around 0 is also available in this arrangement since the constellation point does not exist at (0,0).

### Other embodiments

Given above is a description of various embodiments of the present invention. However, the invention is not limited to the embodiment given above. For example, in the foregoing embodiments, a base station is assumed to be provided with two transmission units for respective systems. Alternatively, the invention is also easily applied to a base station having 3 or more transmission units for respective systems. The same advantage is available in this case by ensuring that the transmission data is coded such that the constellation points of the combined signal received at the mobile station 1 are substantially evenly distributed.

In the foregoing embodiments, the use of 16QAM or QPSK as a quadrature modulation scheme is assumed. Alternatively, 64QAM or 256QAM may also be used as a quadrature modulation scheme.

## Claims

1. A CDMA transmit diversity unit translating a plurality of sets of branched transmission data into transmission codes, transmitting a plurality of CDMA signals each including a portion of the transmission codes, and transmitting a plurality of CDMA signals each including a remaining portion of the transmission codes, wherein the transmission data are translated into the transmission codes such that constellation points of a combined signal derived from the plurality of CDMA signals are substantially evenly distributed.

2. A CDMA diversity unit comprising:
coding means receiving branched transmission data and translating the transmission data into transmission codes;
first transmitting means subjecting first transmission codes produced by said coding means to spreading and quadrature modulation so as to produce a plurality of CDMA signals and transmitting the plurality of CDMA signals responsive to a first symbol timing; and
second transmitting means subjecting second transmission codes different from the first transmission codes and produced by said coding means to spreading and quadrature modulation so as to produce a plurality of CDMA signals and transmitting the plurality of CDMA signals responsive to a second symbol timing different from the first symbol timing, wherein
said coding means translates the transmission data into the transmission codes such that constellation points of a combined signal derived from the plurality of CDMA signals are substantially evenly distributed.

3. The CDMA transmit diversity unit according to claim 2, wherein quadrature modulation is 16QAM, 64QAM or 256QAM.

4. The CDMA transmit diversity unit according to claim 3, wherein said coding means translate the transmission data such that the constellation points into which are mapped the transmission data of a bit pattern prescribed to be mapped into outermost constellation points in the constellation diagram according to the related-art 3GPP standard, coincide with the constellation points into which are mapped the transmission data of a bit pattern prescribed to be mapped into constellation points one step inward from the outermost points according to the related-art 3GPP standard.

5. The CDMA transmit diversity unit according to claim 4, wherein said coding means is provided with a translation table showing correspondence between transmission data patterns and transmission code patterns, including correspondence wherein the constellation points into which are mapped the transmission data of a bit pattern prescribed to be mapped into outermost constellation points in the constellation diagram according to the related-art 3GPP standard, coincide with the constellation points into which are mapped the transmission data of a bit pattern prescribed to be mapped into constellation points one step inward from the outermost points according to the related-art 3GPP standard, so that the transmission data is translated into the transmission codes in accordance with the translation table.

6. The CDMA transmit diversity unit according to claim 2, wherein quadrature modulation is QPSK.

7. The CDMA transmit diversity unit according to claim 6, wherein said coding means translates the transmission data such that the constellation points, into which are mapped the transmission data of a pattern prescribed to be mapped into (0,0) of an I-Q plane according to the 3GPP standard, are distributed at points of maximum absolute I, Q values.
